# EUROPÄISCHE PATENTANMELDUNG

(11) **EP 0 935 362 A2**
(43) Veröffentlichungstag der Anmeldung: **11.08.1999**
(21) Anmeldenummer: 99440017.4
(22) Anmeldetag: 29.01.1999
(51) Int. Cl.: H04J 3/07

(54) **Synchronisiereinrichtung für ein synchrones digitales Nachrichtenübertragungssystem und Verfahren zum Erzeugen eines synchronen Ausgangssignales**

(30) Priorität: 06.02.1998 DE 19804795; 17.02.1998 DE 19806449
(71) Anmelder: ALCATEL, 75008 Paris (FR)
(72) Erfinder: Wolf, Michael, 74395 Mundelsheim (DE); Dive, Geoffrey, 71546 Aspach (DE)
(74) Vertreter: Schätzle, Albin, Dipl.-Phys.

(57) **Zusammenfassung**

Eine Synchronisiereinrichtung (SYNC) für ein synchrones digitales Nachrichtenübertragungssystem (SDH) dient dazu, eine synchrones Ausgangssignales (STM-N), das aus aufeinanderfolgenden, auf einen Rahmentakt synchronisierten Transportmodulen besteht, aus einem digitalen Eingangssignal (PDH) zu erzeugen. Die Synchronisiereinrichtung (SYNC) weist folgendes auf: Eine Empfangseinheit (SI) zum Empfangen des Eingangssignales (PDH), Packetiereinrichtung (PAK) zum Verpacken des Eingangssignal in Untereinheiten (VC-N) der Transportmodule, einen Pufferspeicher (BUF), ein Schreibmittel (WM) zum Schreiben von Datenbits des Eingangssignales (PDH) aus den Untereinheiten (VC-N) in den Pufferspeicher (BUF) mit einem Schreibtakt (WCLK), ein Lesemittel (RM) zum Auslesen von Datenbits aus dem Pufferspeicher mit einem Lesetakt (RCLK) um das Ausgangssignal zu bilden und eine Sendeeinheit (SO) zum Senden des synchronen Ausgangssignales (STM-N). Dabei ist die effektive Bitrate der Untereinheiten gegenüber dem standardisierten Wert erniedrigt oder erhöht, indem der Schreibtakt (WCLK) niedriger gewählt ist als der Lesetakt (RCLK).

## Beschreibung

Die Erfindung betrifft eine Synchronisiereinrichtung für ein synchrones digitales Nachrichtenübertragungssystem zum Erzeugen eines synchronen Ausgangssignales aus einem digitalen Eingangssignal nach dem Oberbegriff des Anspruchs 1 und ein Verfahren zum Erzeugen eines synchronen Ausgangssignales nach dem Oberbegriff des Anspruchs 8.

Aus dem Konferenzartikel "SONET/SDH Pointer Processor Implementation" von M. Klein und R. Urbansky, 1994 IEEE GLOBECOM Communications: The Global Bridge, San Francisco, 28.11 - 2.12.1994, S.655-660, ist eine Synchronisiereinrichtung für SDH- oder SONET-Systeme bekannt, die aus plesiochronen oder pseodo-synchronen digitalen Eingangssignalen ein synchrones Ausgangssignal erzeugt. Dazu werden die Eingangssignale bitweise mit einem Schreibtakt in einen Pufferspeicher geschrieben und mit einem Lesetakt wieder herausgelesen um das synchrone Ausgangssignal zu bilden. Bei diesem Ansatz muß der Lesetakt auf einen Referenztakt des Nachrichtenübertragungsystems synchronisiert sein und zwar mit der in ITU-T G.813 für SDH-Systeme festgelegten Genauigkeit von ± 4,6 ppm.

Die so erzeugten Ausgangssignale werden über das Nachrichtenübertragungssystem transportiert und am anderen Ende mittels einer Desynchronisiereinrichtung wieder zu den ursprünglichen plesiosynchronen oder pseudo-synchronen Nachrichtensignalen zusammengesetzt. Eine Schwierigkeit, die aufgrund der Übertragung auftritt, liegt darin, daß sich niederfrequente Phasenschankungen aufaddieren können, die durch die Zwischenspeicherung in verschiedenen Pufferspeichern des Nachrichtenübertragungssystem verursacht werden. Solche niederfrequente Phasenschankungen werden als Wander bezeichnet und können zu einem Überlauf von Pufferspeichern und damit verbundenem Datenverlust führen. Der Konferenzartikel schlägt zur Vermeidung solchen Wanders vor, die Entscheidungsschwelle des Pointerprozessors mit einer festen Frequenz zu modulieren. Diese Schwellenmodulation ist jedoch technisch aufwendig, da alle Netzelemente abweichend von der Standardisierung abgeändert werden müssen. Zudem führt die Schwellenmodulation zu einer beträchtlichen Erhöhung des Jitters in dem Nachrichtenübertrogungssystems.

Aufgabe der Erfindung ist es, eine Synchronisiereinrichtung für ein synchrones digitale Nachrichtenübertragungssystem sowie ein Verfahren zur Erzeugung eines synchronen Ausgangssignales anzugeben, durch die niederfrequente Phasenschwankungen auf eine andere, technisch weniger aufwendige Weise vermindert werden.

Die Aufgabe wird hinsichtlich der Synchronisiereinrichtung gelöst durch die Merkmale des Anspruchs 1 und hinsichtlich des Verfahrens durch die Merkmale des Anspruchs 8. Vorteilhafte Ausgestaltungen sind den abhängigen Ansprüchen zu entnehmen.

Neben der Verminderung und Vermeidung von Wander liegt ein weiterer Vorteil des Erfindung darin, daß sowohl die Synchronisiereinrichtung wie auch die Desynchronisiereinrichtung am anderen Ende der

Übertragungsstrecke und zwischengeschaltete Netzelemente des synchronen digitalen Nachrichtenübertragungssystems mit kleineren Pufferspeichern auskommen als bislang. Ein weiterer Vorteil der Erfindung liegt darin, daß die Laufzeit von Nachrichtensignalen durch das Nachrichtenübertragungssystem vermindert wird, wenn der Schreibtakt niedriger ist als der Lesetakt, da der Füllstand aller Pufferspeicher der Übertragungsstrecke dann an der unteren Grenze liegt. Ein weiterer Vorteil der Erfindung ist, daß die erfindungsgemäße Synchronisiereinrichtung mit bestehenden Nachrichtenübertragungssystemen kompatibel ist.

Bei einer besonders vorteilhaften Weiterbildung der Erfindung nach Unteranspruch 7 wird das Eingangssignal aufgeteilt und parallel in mehrere Untereinheiten synchroner Transportmodule verpackt. Diese mehreren Untereinheiten werden mit dem Schreibtakt in dem Pufferspeicher zwischengespeichert und mit dem höheren oder niedrigeren Lesetakt so wieder ausgelesen, daß mehrere synchrone Ausgnagssignale gebildet werden. Der besondere Vorteil dieser Weiterbildung liegt darin, daß nun Eingangssignale, beispielsweise ATM-Signale (Asynchroner Transport Modus) oder digitalisierte Videosignale, verarbeitet werden können, die die Transportkapazität eines einzigen virtuellen Containers übersteigen würden. Durch die erfindungsgemäße Zwischenspeicherung mit dem Schreibtakt, der niedriger oder höher ist als der Lesetakt, werden Phasenabweichungen, d.h. Differenzen in der Übertragungszeit, der verschiedenen virtuellen Container vermieden. Dadurch wird erreicht, daß in einer Desynchronisiereinrichtung am anderen Ende des synchronen Nachrichtenübertragungssystemes die in den mehreren Untereinheiten verpackten und transportierten Teile des ursprünglichen Eingangssignales einfach zu der ursprünglichen Form wieder zusammengesetzt werden können.

Im folgenden werden drei Ausführungsbeispiele der Erfindung anhand der Figuren 1 bis 6d erläutert. Es zeigen:
- Figur 1: ein synchrones digitales Nachrichtenübertragungssystem mit Synchronisier- und Desynchronisiereinrichtung,
- Figur 2: ein Blockdiagramm der erfindungsgemäßen Synchronisiereinrichtung im ersten Ausführungsbeispiel,
- Figur 3: ein Blockdiagramm der erfindungsgemäßen Synchronisiereinrichtung im zweiten Ausführungsbeispiel,
- Figur 4: ein Blockdiagramm der erfindungsgemäßen Synchronisiereinrichtung im dritten Ausführungsbeispiel,
- Figur 5: ein Ablaufdiagramm des erfindungsgemäßen Verfahrens und
- Figuren 6a bis 6d:: Anwendungen der Erfindung.

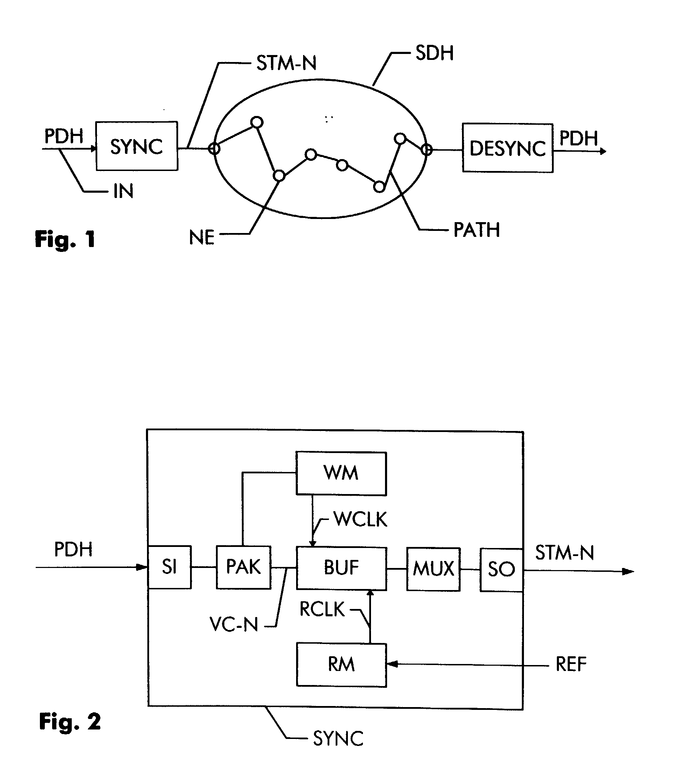

In Figur 1 ist das synchrones digitale Nachrichtenübertragungssystem SDH des Ausführungsbeispiels schematisch dargestellt. Es handelt sich dabei um eine Vielzahl untereinander vernetzter Netzelemente, wie Crossconnect-Einrichtungen und Add/Drop-Multiplexern. Eine Synchronisiereinrichtung SYNC bildet die Schnittstelle zwischen dem synchronen digitalen Nachrichtenübertragungssystem und einem plesiochronen Nachrichtenübertragungssystem. Die Synchronisiereinrichtung erhält als Eingangssignal ein plesiochrones Nachrichtensignal PDH und erzeugt daraus ein synchrones Nachrichtensignal STM-N, das sie in das synchrones digitale Nachrichtenübertragungssystem SDH sendet. Über einen Pfad PATH des Nachrichtenübertragungssystems, der über eine Vielzahl zwischengeschalteter beispielhaft gezeigter Netzelemente NE verläuft, wird das synchrone Nachrichtensignal STM-N zu der Desynchronisiereinrichtung übertragen. Dort wird es wieder zu dem ursprünglichen plesiochronen Nachrichtensignal PDH zusammengesetzt.

Ein synchrones Nachrichtensignal STM-N besteht aus aufeinanderfolgenden synchronen Transportmodulen, die auf einen Rahmentakt synchronisiert sind. Das synchrone Nachrichtensignal STM-N ist auf einen im ganzen synchronen Nachrichtenübertragungssystem einheitlichen Referenztakt synchronisiert. Damit ein plesiochrones Nachrichtensignal über ein synchrones digitale Nachrichtenübertragungssystem übertragen werden kann, muß es paketweise in die Nutzlast der synchronen Transportmodule verpackt werden. Dieses leistet die Synchronisiereinrichtung.

Eine Grundidee der Erfindung liegt nun darin, Eingangssignale zuerst in Untereinheiten der synchronen Transportmodule, sogenannte virtuelle Container VC-N der Größe N (N= 11, 12, 2, 3 oder 4), zu verpacken, die effektive Bitrate der virtuellen Container gegenüber dem standardisierten Wert (siehe ITU-T G.707, 03/96, Kapitel 6.1) zu erniedrigen oder zu erhöhen und die virtuellen Container anschließend in die Transportmodule zu multiplexen. Dadurch wird erreicht, daß der Füllstand von Pufferspeichern zwischengeschalteter Netzelemente in den Bereich der unteren beziehungsweise der oberen Grenze verlagert und festgehalten wird und so ein Aufaddieren von Wander vermindert wird.

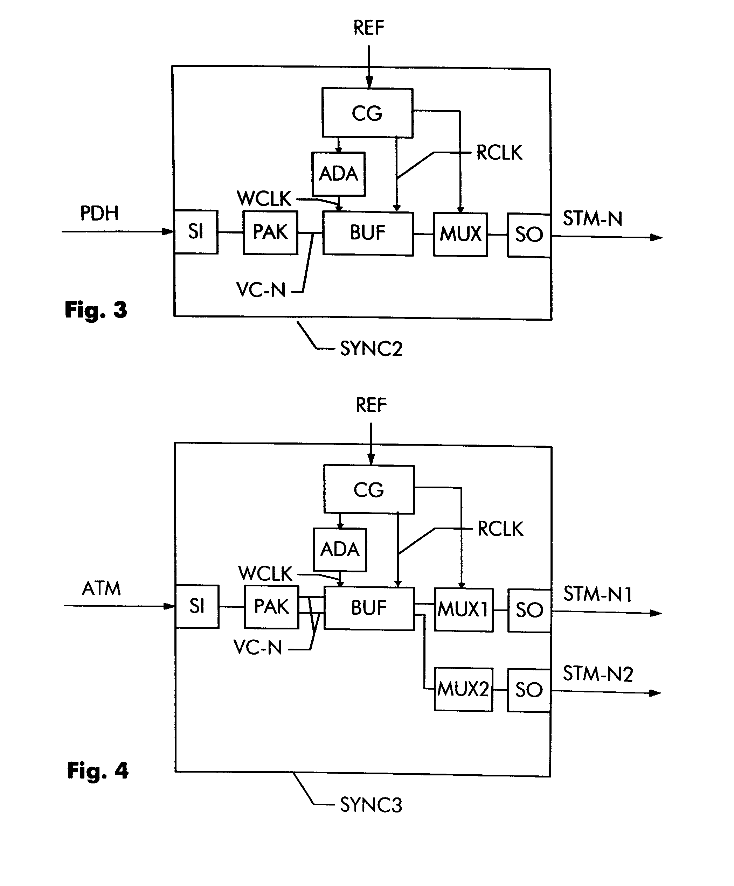

In Figur 2 ist das Blockdiagramm einer erfindungsgemäßen Synchronisiereinrichtung SYNC in einem ersten Ausführungsbeispiel gezeigt. Sie enthält eine Empfangseinheit SI, z.B. eine Schnittstellenschaltung mit optoelektrischem Wandler (z.B. nach ITU-T G.703), die ein digitales Eingangssignal PDH empfängt. Es handelt sich bei dem Eingangssignal um ein plesiochrones Nachrichtensignal. Von der Empfangseinheit wird das empfangene Nachrichtensignal an eine Paketiereinrichtung PAK weitergeleitet, die es in Untereinheiten der synchronen Transportmodule, sogenannte virtuelle Container VC-N, verpackt. Die so verpackten Datenbits des Eingangssignales werden nun bitweise mittels eines Schreibmittels WM mit einem Schreibtakt WCLK in einen Pufferspeicher BUF geschrieben. Das Schreibmittel WM umfaßt einen Taktgenerator für den Schreibtakt WCLK. Mittels eines Lesemittels RM werden die Datenbits nun mit einem Lesetakt RCLK wieder aus dem Pufferspeicher ausgelesen und einer Multiplexeinrichtung MUX zugeleitet, welche die Untereinheiten, die nun auf den Lesetakt synchronisiert sind, in Transportmodule eines synchronen Ausgangssignales STM-N multiplext. Das Multiplexen geschieht wie in ITU-T G.707, 03/96, Kapitel 6.1 beschrieben.

Erfindungsgemäß ist der Schreibtakt WCLK niedriger als der Lesetakt RCLK. Der Lesetakt RCLK ist auf den Referenztakt des Nachrichtenübertragungssystems synchronisiert. Dadurch ist die effektive Bitrate des virtuellen Containers gegenüber dem im Standard festgelegten Wert erniedrigt. Die Differenz zwischen der effektiven Bitrate des virtuellen Containers VC-N und der standardisierten Bitrate wird durch Stopfvorgänge, die auch als Pointeraktionen (pointer justification) bezeichnet werden, ausgeglichen.

Der Schreibtakt WCLK kann vorteilhaft um mindestens 4,6 ppm niedriger gewählt werden als der Lesetakt RCLK. Eine Abweichung des Bittaktes gesendeter Ausgangssignale von dem Referenztakt des Nachrichtenübertragungssystems von 4,6 ppm ist die nach ITU-T G.813 maximal zulässige Abweichung. Besonders vorteilhaft ist der Schreibtakt jedoch um mehr als 4,6 ppm niedriger gewählt als der Referenztakt, um zu bewirken, daß die Pufferspeicher aller zwischengeschalteter Netzelemente im Übertragungspfad durch das Nachrichtenübertragungssystem bei jedem zulässigen Synchronisationszustand immer an der unteren Füllgrenze bleiben. Dadurch wird die Entstehung von Wander verhindert. Zwar entsteht durch die Stopfvorgänge Jitter, dieser kann jedoch durch Tiefpaßfilterung in der Desynchronisiereinrichtung am anderen Ende eines Übertragungspfades in ausreichendem Maße entfernt werden.

Vorteilhaft ist der Schreibtakt um soviel niedriger gewählt als der Lesetakt, daß die in dem synchronen digitalen Nachrichtenübertragungssystem maximal zulässige Rate an Stopfvorgängen erreicht wird. Solange diese maximal zulässige Rate nicht überschritten wird, kann das Ausgangssignal über herkömmliche SDH-Netze oder SONET-Netze transportiert werden. Je niedriger jedoch der Schreibtakt ist, desto höher ist die Frequenz des durch ausgleichende Pointeraktionen entstehenden Jitters und desto besser kann dieser Jitter durch Tiefpaßfilterung wieder entfernt werden. Daher kann der Schreibtakt bis etwa 200 ppm niedriger gewählt werden als der Lesetakt bzw. der Referenztakt des Nachrichtenübertragungssystems.

Außer plesiochronen Nachrichtensignalen können auch andere digitale Eingangssignale über das digitale synchrone Nachrichtenübertragungssystem übertragen werden, wie z.B. codierte Videosignale.

Ein zweites Ausführungsbeispiel der Erfindung ist in Figur 3 in einem Blockdiagramm gezeigt. Die Synchronisiereinrichtung SYNC2 verfügt wie im ersten Ausführungsbeispiel über ein Eingangsmittel SI, ein Ausgangsmittel SO, einen Pufferspeicher BUF, eine Paketiervorrichtung PAK und eine Multiplexvorrichtung MUX. Im Unterschied zum ersten Ausführungsbeispiel besitzt die Synchronisiereinrichtung einen einzigen Taktgenerator CG, der auf den Referenztakt REF des Nachrichtenübertragungssystems synchronisiert ist. Dieser Taktgenerator versorgt alle geräteinternen Baugruppen, wie die Multiplexeinrichtung mit einem Taktsignal. Dieses Taktsignal dient auch als Lesetakt RCLK. Zwischen Taktgenerator CG und dem Schreibtakteingang des Pufferspeichers BUF ist eine Taktanpassungsschaltung ADA geschaltet, die den Takt des Taktgenerators CG erniedrigt, um den Schreibtakt WCLK zu generieren. Dadurch wird dann erreicht, daß der Schreibtakt niedriger ist als der Lesetakt.

In einer vorteilhaften Weiterbildung der Erfindung ist diese Taktanpassungsschaltung umschaltbar so steuerbar, daß Schreib- und Lesetakt zumindest in den für die Taktabweichung in SDH standardisierten Grenzen übereinstimmen. Dadurch wird erreicht, daß die Funktion einen niedrigeren Schreibtakt zu verwenden, abgeschaltet werden kann, damit die erfindungsgemäße Synchronisiereinrichtung mit üblichen Desynchronisiereinrichtungen zusammenarbeiten kann. Das Ein- und Abschalten wird vorteilhaft durch eine Nachricht im Rahmenkopf (Overhead) gesendeter Transportmodulen gesteuert. Mittels dieser Nachricht wird der Desynchronisiereinrichtung am anderen Ende des Übertragungspfades mitgeteilt, daß die Bitrate des virtuellen Containers VC-N nun auf die erfindungsgemäße Weise erniedrigt wird. Dazu wird vorteilhaft ein für betreiberspezifische Anwendungen reserviertes Bit oder Byte im Rahmenkopf von synchronen Transportmodulen verwendet. Vorteilhafterweise quittiert die Desynchronisiereinrichtung die Nachricht und teilt der Synchronisiereinrichtung so seine Fähigkeit mit die erwartete hohe Rate an Pointeraktionen zu verarbeiten. Die Desynchronisiereinrichtung kann dazu über eine schmalbandige Taktfilterung mit einer Bandbreite im Bereich von 10 bis 100 mHz verfügen.

Gemäß dem dritten in Figur 4 gezeigten Ausführungsbeispiel einer Synchronisiereinrichtung SYNC3 werden von der Paketiereinrichtung PAK aus dem Eingangssignal ATM zwei virtuelle Container VC-N parallel gebildet. Dabei bedeutet parallel, daß zwei voneinender unabhängige virtuelle Container verwendet werden, die unterschiedliche virtuelle Verbindungen durch das synchrone digitale Nachrichtenübertragungssystem bedeuten. Die mehreren virtuellen Container VC-N haben erfindungsgemäß eine niedrigere Bitrate als laut G. ITU-T G.707, 03/96, Kapitel 6.1 vorgesehen und werden mit dem von der Taktanpassungsschaltung ADA erniedrigten Schreibtakt WCLK in den Pufferspeicher BUF geschrieben. Aus dem Pufferspeicher BUF werden sie dann mit dem Lesetakt RCLK, der von dem Taktgenerator CG der Synchronisiereinrichtung SYNC3 erzeugt wird und auf den Referenztakt REF des Nachrichtenübertragungssystems synchronisiert ist, wieder ausgelesen. Das Auslesen geschieht in der Art, daß von zwei Multiplexeinrichtungen MUX1 und MUX2 mehrere synchrone Ausgangssignale STM-N1, STM-N2 gebildet werden. Die zwei synchronen Ausgangssignale STM-N1, STM-N2 werden dann von zwei Sendeeinheiten SO über das synchrone Nachrichtenübertragungssystem übertragen. Am anderen Ende das Nachrichtenübetragungssystemes kann die Nutzlast der beiden Ausgangssignale STM-N1 und STM-N2 dann von einer Desynchronisiereinrichtung wieder ausgepackt und zu dem ursprünglichen Eingangssignal ATM zusammengesetzt werden.

Die in dem dritten Ausführungsbeispiel geschilderte Maßnahme, ein Eingangssignal aufzuteilen und in mehreren virtuellen Containern verpackt zu übertragen, wird als virtual concatenation bezeichnet ist in ITU-T G.707, 3/96, Kapitel 8.1.7.2 und 8.3.6.2 beschrieben. Diese Maßnahme wird beispielsweise dann angewendet, wenn die Bitrate des Eingangssignales höher ist als die maximale Nutzlast der virtuellen Container. Somit können auch Eingangssignale mit einer Übertragungsrate von mehr als 140 Mbit/s (die Kapazität eines VC-4 beträgt 139 264 kbit/s) in dem synchronen digitalen Nachrichtenübertragungssystem übertragen werden. Durch die erfindungsgemäße Verwendung von virtuellen Containern mit gegenüber dem Standard reduzierter Bitrate wird vorteilhaft erreicht, daß die aufgrund von Wander entstehenden Phasenabweichung zwischen den mehreren virtuellen Containern minimal sind, was das Zusammensetzen in der Desynchronisiereinrichtung am anderen Ende eines Übertragungspfades ermöglicht.

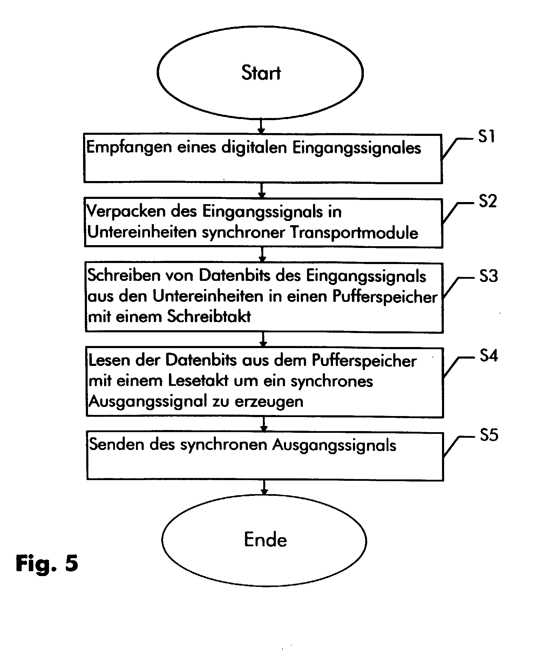

In Figur 5 ist ein Ablaufdiagramm des erfindungsgemäßen Verfahrens zum Erzeugen eines synchronen Ausgangssignals dargestellt. Dabei werden nacheinander folgende Schritte ausgeführt:
- Schritt S1:: Über eine Empfangseinheit, die in den Ausführungsbeispielen eine PDH-Schnittstelle ist, wird an einer Synchronisiereinrichtung ein digitales Eingangssignal empfangen.
- Schritt S2:: Das digitale Eingangssignal wird mittels einer Paketiereinrichtung in Untereinheiten synchroner Transportmodule, sogenannte virtuelle Container, verpackt.
- Schritt S3:: Die Datenbits des virtuellen Containers werden nacheinander mit dem Schreibtakt eines Schreibmittels in einen Pufferspeicher geschrieben.
- Schritt S4:: Die Datenbits werden mit dem Lesetakt eines Lesemittels wieder aus dem Pufferspeicher ausgelesen, um das synchrone Ausgangssignal zu bilden. Dabei ist der Lesetakt höher als der Schreibtakt, vorzugsweise um mindestens 4,6 ppm.
- Schritt S5:: Über eine Sendeeinheit wird das Ausgangssignal in das synchrone digitale Nachrichtenübertragungssystem gesendet.

Zwischen den Schritten S4 und S5 kann in einem weiteren Schritt ein Multiplexen jeweils mehrerer virtueller Container in die synchronen Transportmodule erfolgen. In einem so gebildeten Ausgangssignal werden dann mehrere in virtuelle Container mit niedrigerer als der standardisierten Bitrate verpackte Eingangssignale gesendet.

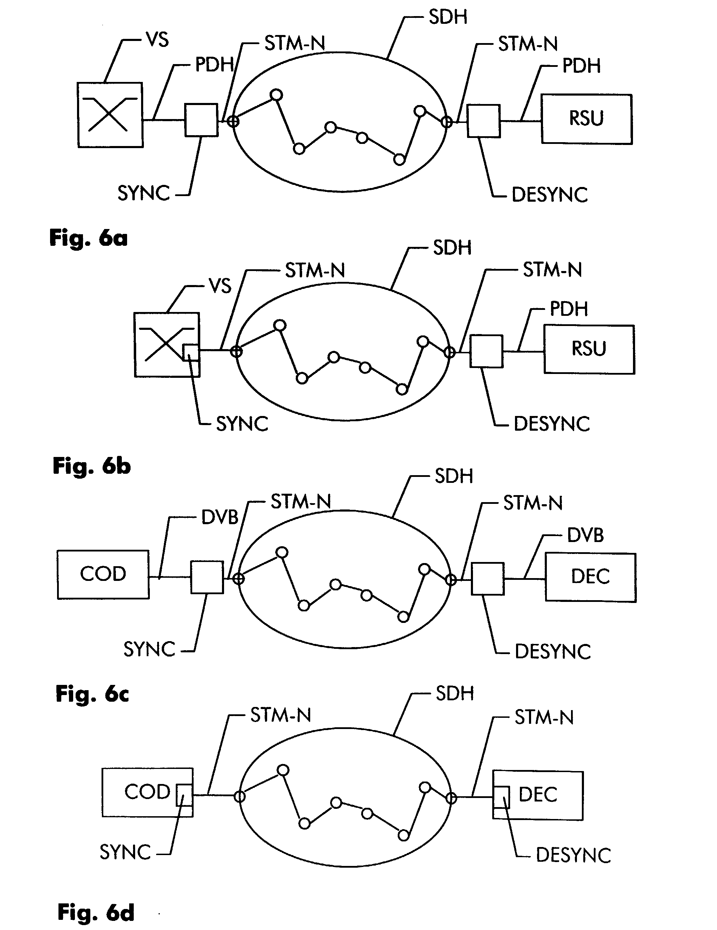

Anwendungen der Erfindung sind in den Figuren 6a bis 6d gezeigt. In Figur 6a ist zu sehen, daß das digitale Eingangssignal PDH, ein plesiochrones Nachrichtensignal, von einer Vermittlungsstelle VS erzeugt wird, über eine erfindungsgemäße Synchronisiereinrichtung SYNC, ein synchrones digitales Nachrichtenübertragungssystem SDH und eine Desynchronisiereinrichtung DESYNC zu einem Konzentrator RSU gesendet wird. Dabei synchronisiert die Vermittlungsstelle VS den Konzentrator RSU mit Hilfe des so übertragenen plesiochronen Nachrichtensignals PDH. Dies ist möglich, da dank der Erfindung niederfrequente Phasenschwankungen in dem Nachrichtensignal nicht auftreten. In Figur 6b ist gezeigt, daß die erfindungsgemäße Synchronisiereinrichtung SYNC auch in die Vermittlungsstelle integriert sein kann.

In Figur 6c wird das digitale Eingangssignal DVB, ein digitales Videosignal, von einer Kodiereinrichtung COD für Videosignale erzeugt. Es kann sich beispielsweise um VoD oder DVB-Signale handeln (VoD: video on demand; DVB: digital video broadcasting) oder auch um Signale mit einer Bitrate von 34 oder 140 MBit/s. Das Eingangssignal DVB wird wie in der Figuren 6a über Synchronisiereinrichtung, synchrones digitales Nachrichtenübertragungssystem und Desynchronisiereinrichtung zu einer Dekodiereinrichtung DEC für digitale Videosignale gesendet. Dies ist vorteilhaft, da es bei diesem Aufbau dank der Erfindung ebenfalls möglich ist, die Dekodiereinrichtung DEC mit dem übertragenen digitalen Videosignal DVB auf die Kodiereinrichtung COD zu synchronisieren. In Figur 6d ist gezeigt, daß die erfindungsgemäße Synchronisiereinrichtung SYNC auch in die Kodiereinrichtung COD integriert sein kann und daß die Desynchronisiereinrichtung DEC auch in die Dekodiereinrichtung DEC integriert sein kann.

In den Ausführungsbeispielen ist stets der Schreibtakt niedriger als der Lesetakt gewählt. Diese Ausführungsform ist bevorzugt, da so erreicht wird, daß die Signallaufzeiten durch das synchrone digitale Nachrichtenübertragungssystem minimal sind, da alle Pufferspeicher von Netzelementen im Übertragungspfad am unteren Füllstand sind. Die Erfindung ist jedoch ebenso mit einem positiven Frequenzoffset, d.h. mit einem gegenüber dem Lesetakt höheren Schreibtakt, ausführbar, da auch in einer Ausführung Wander vermieden wird, denn der Füllstand der Pufferspeicher ist dann an der oberen Grenze.

## Patentansprüche

1. Synchronisiereinrichtung (SYNC) für ein synchrones digitales Nachrichtenübertragungssystem (SDH) zum Erzeugen eines synchronen Ausgangssignales (STM-N), das aus aufeinanderfolgenden, auf einen Rahmentakt synchronisierten Transportmodulen besteht, aus einem digitalen Eingangssignal (PDH), wobei die Synchronisiereinrichtung (SYNC) folgendes aufweist:
- eine Empfangseinheit (SI) zum Empfangen des Eingangssignales (PDH),
- einen Pufferspeicher (BUF),
- ein Schreibmittel (WM) zum Schreiben von Datenbits des Eingangssignales (PDH) in den Pufferspeicher (BUF) mit einem Schreibtakt (WCLK),
- ein Lesemittel (RM) zum Auslesen von Datenbits aus dem Pufferspeicher mit einem Lesetakt (RCLK), und
- eine Sendeeinheit (SO) zum Senden des synchronen Ausgangssignales (STM-N),
dadurch gekennzeichnet,
- daß die Synchronisiereinrichtung (SYNC) eine zwischen der Empfangseinheit (SI) und dem Pufferspeicher (BUF) angeordnete Packetiereinrichtung (PAK) zum Verpacken des Eingangssignal in Untereinheiten (VC-N) der Transportmodule enthält,
- daß das Schreibmittel (WM) so ausgebildet ist, daß es die Datenbits des Eingangssignales (PDH) aus den Untereinheiten (VC-N) in den Puffer (BUF) schreibt, und
- daß der Schreibtakt (WCLK) des Schreibmittels (WM) niedriger oder höher ist als der Lesetakt (RCLK) des Lesemittels (RM).

2. Synchronisiereinrichtung (SYNC) nach Anspruch 1, bei dem der Lesetakt (RCLK) und der Schreibtakt (WCLK) von einem Taktgenerator (CG) generiert wird und der Schreibtakt (WCLK) mittels einer dem Taktgenerator (CG) nachgeschalteten Taktanpassungsschaltung (ADA) erniedrigt ist.

3. Synchronisiereinrichtung (SYNC) nach Anspruch 2, bei der die Taktanpassungsschaltung (ADA) so steuerbar ist, daß der Lesetakt (RCLK) und der Schreibtakt (WCLK) innerhalb der für das synchrone digitale Nachrichtenübertragungsnetz (SDH) zugelassenen Grenzen übereinstimmen.

4. Synchronisiereinrichtung (SYNC) nach Anspruch 3, bei der eine Signalisiervorrichtung vorgesehen ist, welche im Rahmenkopf der zu sendenden synchronen Transportmodule eine Nachricht erzeugt, wenn die Taktanpassungsschaltung (ADA) so gesteuert ist, daß der Schreibtakt (RCLK) niedriger ist als der Lesetakt (WCLK).

5. Synchronisiereinrichtung (SYNC) nach Anspruch 1, bei der der Schreibtakt (WCLK) um soviel niedriger ist als der Lesetakt (RCLK), daß in etwa die maximale in dem synchronen digitalen Nachrichtenübertragungsnetz (SDH) zugelassene Rate an Pointeraktionen erzielt wird.

6. Synchronisiereinrichtung (SYNC) nach Anspruch 1, bei dem der Schreibtakt (WCLK) des Schreibmittels (WM) um mindestens 4,6 ppm niedriger ist als der Lesetakt (RCLK) des Lesemittels (RM).

7. Synchronisiereinrichtung (SYNC3) nach Anspruch 1, bei der die Paketiereinrichtung (PAK) so ausgebildet ist, daß sie das Eingangssignal (ATM) aufteilt und parallel in mehrere Untereinheiten (VC-N) synchroner Transportmodule verpackt, bei der die Schreibmittel (CD, ADA) so ausgebildet sind, daß sie die mehreren Untereinheiten (VC-N) mit dem Schreibtakt (WCLK) in den Pufferspeicher (BUF) schreiben und die Lesemittel (CG) so ausgebildet sind, daß sie die mehreren Untereinheiten (VC-N) mit dem Lesetakt (RCLK) so aus dem Pufferspeicher (BUF) lesen, daß mehrere synchrone Ausgangssignale (STM-N1, STM-N2) gebildet werden.

8. Verfahren zum Erzeugen eines synchronen Ausgangssignales (STM-N), das aus aufeinanderfolgenden, auf einen Rahmentakt synchronisierten Transportmodulen besteht, aus einem digitalen Eingangssignal (PDH), mit folgenden Schritten:
- Empfangen des Eingangssignales,
- Schreiben von Datenbits des Eingangssignales in einen Pufferspeicher (BUF) mit einem Schreibtakt (WCLK),
- Auslesen von Datenbits aus dem Pufferspeicher (BUF) mit einem Lesetakt (RCLK) um des synchrone Ausgangssignal (STM-N) zu bilden, und
- Senden des synchronen Ausgangssignales (STM-N),
dadurch gekennzeichnet,
- daß das Eingangssignal (PDH) in Untereinheiten (VC-N) der Transportmodule verpackt wird, bevor die Datenbits in den Pufferspeicher (BUF) geschrieben werden,
- daß die Datenbits des Eingangssignales (PDH) aus den Untereinheiten (VC-N) in den Pufferspeicher (BUF) geschrieben werden und
- daß der Schreibtakt (WCLK) niedriger oder höher ist als der Lesetakt (RCLK).
